# EUROPEAN PATENT SPECIFICATION

(11) **EP 2 708 090 B1**
(45) Date of publication and mention of the grant of the patent: **21.11.2018**
(21) Application number: 11864918.5
(22) Date of filing: 12.05.2011
(51) Int. Cl.: H04W 84/18, H04W 4/00, H04W 24/10, H04W 4/38, H04L 29/08

(54) **SENSOR DATA DISTRIBUTION SYSTEM**
SENSORDATENVERTEILUNGSSYSTEM
SYSTÈME DE DISTRIBUTION DE DONNÉES DE CAPTEURS

(43) Date of publication of application: 19.03.2014
(73) Proprietor: Telefonaktiebolaget LM Ericsson (publ), 164 83 Stockholm (SE)
(72) Inventor: HJELM, Johan, Tokyo Tokyo 165-0025 (JP); GOLD, Richard, 60486 Frankfurt am Main (DE)
(74) Representative: Brann AB
(86) International application number: PCT/SE2011/050603
(87) International publication number: WO 2012/154099

(56) References cited:
- WO-A1-2008/135080
- WO-A1-2009/149759
- US-A1- 2006 143 439
- US-A1- 2010 315 207
- STROHBACH, M. ET AL.: 'A case for IMS' VEHICULAR TECHNOLOGY MAGAZINE, IEEE vol. 4, no. ISS.1, March 2009, pages 57 - 64, XP011256598 & DATABASE INSPEC 'Digital Object Identifier : 10.1109/MVT.2008.931627' Database accession no. 10627586
- CAMARILLO, GONZALO ET AL.: '3G IP Multimedia Subsystem (IMS) : Merging the Internet and the Cellular Worlds' 2005, HOBOKEN, NJ, USA, pages 191 - 195, XP002482734 Retrieved from the Internet: <URL:http://site.ebrary.com/lib/prvbib/Doc? id=10114057&ppg=217>
- DOMINGO, M.C.: 'A context-aware service architecture for the integration of body sensor networks and social networks through the IP multimedia subsystem' COMMUNICATIONS MAGAZINE, IEEE vol. 49, no. ISS.1, January 2011, pages 102 - 108, XP011341191 & DATABASE INSPEC 'Digital Object Identifier : 10.1109/MCOM.2011.5681022' Database accession no. 11729607

## Description

### TECHNICAL FIELD

This invention relates to data measurements and more particularly, to collection and distribution of sensor data.

### BACKGROUND

Cellular service providers are currently deploying environmental sensors on their base stations. The sensors supplement existing weather service and satellite readings. The sensors can measure pollen, carbon dioxide (CO2), ultraviolet (UV) sunlight and other atmospheric conditions affecting quality of life.

Data from these sensors can be provided to various entities such as weather forecasting and other information services, pharmaceutical companies, healthcare institutions and municipal governments for use in a variety of applications.

Newer technologies are creating small, distributed sensor packages. Many mobile phones have a variety of sensors for sensing acceleration, light and sound for example. Chemical sensors such as hygrometers, barometers and thermometers can easily be created and implemented in relatively inexpensive packages which can be carried by the user.

Sensors deployed at the base station have certain disadvantages. The base station is typically at a different location than the people that are interested in or affected by the measurements. For measurements which vary with height such as particulate and pollen pollution for example, the sensor measurements are not particularly relevant as those on the street level. A base station location can be several stories high and the measurements reflect conditions at that height.

Furthermore, since sensors measure what they are set up for, they can not be complimented with additional data from other measurement stations. The deployment of pollen sensors in addition to NO₂ sensors, for example, will require physical intervention resulting in additional cost as a service person would be required to visit all the deployed base stations.

An alternative to deploying the sensors on the base stations is to aggregate the readings from individual mobile phones in nearby locations. These readings can be presented over the Internet for example, in a technology called "collaborative sensing". This, however, does not provide a reference sensor reading for the location - it will only measure what goes on when a person or user is present at the time of the reading. This would be a considerable disadvantage to a person that would (or should) have avoided the location such as one suffering from allergies, etc.

US 2006/143439 A1 describes a method and a system for real-time mangement of sensor data based on an application level logic at an enterprise. US 2006/143439 A1 does not utilize sensor readings from a mobile phone of a user in association with a reference sensor reading from a fixed sensor at a location without the user being present at the location at the time of reading.

US2010/315207 A1 describes a network node, referred to as data fusion center, receiving reports from communication devices forming a network of sensors. The reports are intercepted and filtered at a network processing system positioned along the path between the devices and the network node, according to criteria set by the network node itself. The network node processes two or more reports from different sensors, e.g., by verifying one against the other, in order to derive spatial and temporal patterns.

### SUMMARY

An object of the invention is to collect data from a plurality of sensors which are attached in an ad-hoc manner. These sensor readings may be collated with historical information or information collected from a fixed location such as base stations.

The invention is set out in the appended set of claims. The embodiments and/or examples of the following description which are not covered by the appended claims are considered as not being part of the present invention.

In one embodiment, a method of processing and distributing collected sensor measurements is disclosed. The method includes receiving a first set of filtered data from a first sensor server associated with a mobile device having at least one integrated sensor and a second set of filtered data from a second sensor server associated with at least one fixed sensor, enriching the received first set of filtered data utilizing the received second set of filtered data, storing the first set of filtered data, the second set of filtered data and the enriched data and selectively transmitting the enriched data to requestors of at least a portion of the enriched data, wherein the first set of filtered data is filtered according to a first pre-set policy prior to reception at the network node and the second set of filtered data is filtered according to a second pre-set policy prior to reception at the network node.

In another embodiment, a network node is disclosed. The network node includes a receiving means for receiving a first set of filtered data from a first sensor server associated with a mobile device having at least one integrated sensor and a second set of filtered data from a second sensor server associated with at least one fixed sensor, a processor for enriching the received first set of filtered data utilizing the received second set of filtered data, a memory for storing the first set of filtered data, the second set of filtered data and the enriched data and a transmitting means for selectively transmitting the enriched data to requestors of at least a portion of the enriched data, wherein the first set of filtered data is filtered according to a first pre-set policy prior to reception at the network node and the second set of filtered data is filtered according to a second pre-set policy prior to reception at the network node.

In a further embodiment, a computer program is disclosed. The computer program comprises computer readable program modules which when run on a network node causes the network node to receive a first set of filtered data from a first sensor server associated with a mobile device having at least one integrated sensor and a second set of filtered data from a second sensor server associated with at least one fixed sensor, enrich the received first set of filtered data utilizing the received second set of filtered data, store the first set of filtered data, the second set of filtered data and the enriched data and selectively transmit the enriched data to requestors of at least a portion of the enriched data, wherein the first set of filtered data is filtered according to a first pre-set policy prior to reception at the network node and the second set of filtered data is filtered according to a second pre-set policy prior to reception at the network node.

The word "plurality" shall throughout the descriptions and claims be interpreted as "more than one".

### BRIEF DESCRIPTION OF THE DRAWINGS

The several features, objects, and advantages of Applicants' invention will be understood by reading this description in conjunction with the drawings, in which:
FIGs. 1 and 2 illustrate sensor collection and distribution systems according to exemplary embodiments;
FIG. 3 illustrates a method in accordance with an exemplary embodiment;
FIG. 4 illustrates a network node in accordance with exemplary embodiments;
FIG. 5 illustrates a method in accordance with exemplary embodiments.

### DETAILED DESCRIPTION

The various features of the invention will now be described with reference to the figures, in which like parts are identified with the same reference characters.

The various aspects of the invention will now be described in greater detail in connection with a number of exemplary embodiments. To facilitate an understanding of the invention, many aspects of the invention are described in terms of sequences of actions to be performed by elements of a computer system or other hardware capable of executing programmed instructions. It will be recognized that in each of the embodiments, the various actions could be performed by specialized circuits (e.g., analog and/or discrete logic gates interconnected to perform a specialized function), by one or more processors programmed with a suitable set of instructions, or by a combination of both. The term "circuitry configured to" perform one or more described actions is used herein to refer to any such embodiment (i.e., one or more specialized circuits and/or one or more programmed processors).

Moreover, the invention can additionally be considered to be embodied entirely within any form of computer readable carrier, such as solid-state memory, magnetic disk, or optical disk containing an appropriate set of computer instructions that would cause a processor to carry out the techniques described herein. Thus, the various aspects of the invention may be embodied in many different forms, and all such forms are contemplated to be within the scope of the invention, as defined by the appended claims. For each of the various aspects of the invention, any such form of embodiments as described above may be referred to herein as "logic configured to" perform a described action, or alternatively as "logic that" performs a described action.

According to exemplary embodiments, systems and methods for monitoring, compiling and utilizing sensor information are disclosed.

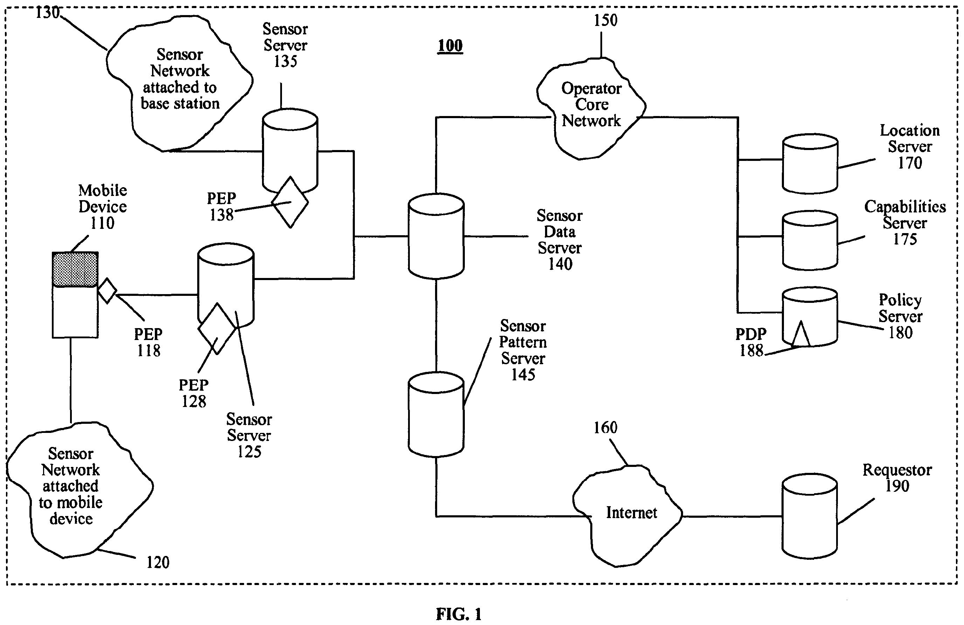

An exemplary sensor monitoring and reporting system 100 is illustrated in FIG. 1. Sensor monitoring and reporting system 100 may include a mobile device 110. Mobile device 110 may also be referred to as user equipment (UE).

Mobile device 110 may be equipped with two communication interfaces. One interface may facilitate access to a mobile communication network via a base station for example. The other (i.e. second) interface may facilitate access over a short range radio communication link such as Bluetooth for example. The mobile device may include separate transceivers for providing access over these communication interfaces. Mobile device 110 may communicate via the second interface to a plurality of sensors that may form a network such as sensor network (SN) 120. Sensors within sensor network 120 may measure environmental conditions such as temperature, humidity, chemical compositions of the atmosphere, etc.

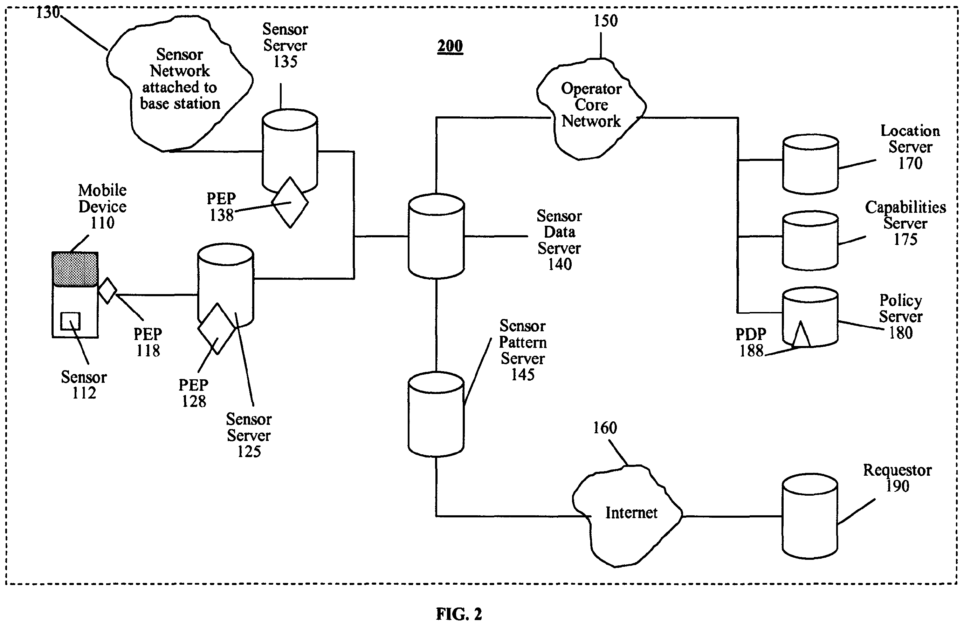

In some embodiments, the sensor may be part of (or integrated in) the mobile device. As illustrated in FIG. 2, sensors 112 may be integrated within mobile device 110.

A mobile device (i.e. mobile device 110) that is connected via its short range interface to the sensor network 120 may attach to a mobile access network which is served by a base station connected to the operator core network.

The attachment may be an enhanced part of the regular procedure a mobile device in a standardized system (as standardized e.g. by 3GPP and 3GPP2) follows, and can be achieved by, for example, applying the Internet Multimedia Subsystem (IMS) as standardized by 3GPP.

Mobile device 110 may reports its capabilities (i.e. capabilities of the sensors in sensor network 120) to a capabilities server (CS) 175 (capabilities server may be part of the operator core network) as part of the attachment process. If IMS is used, mobile device 110 may achieve this reporting via the triggering of *-CSCF for example.

The capabilities may include the type of sensors or readings that the mobile device can provide as well as the address and identity. The capabilities server 175 may notify a sensor data server (SDS) 140 (sensor data server may be part of the operator core network) of the availability of a mobile device with a sensor package (i.e. sensor network 120). Sensor data server 140 may also subscribe to the capabilities server 175 for receiving this information (i.e. availability of a mobile device with associated capabilities, etc.). Mobile device 110 may be connected to capabilities server 175 via the sensor data server. Concurrent with reporting of the capabilities, the device may be positioned with respect to the co-ordinates of its location.

Sensor data server 140 may look up the position of the mobile device 110 in a location server (LS) 170 (location server may be part of the operator core network). In some embodiments, mobile device 110 may be equipped with means of generating positioning information (e.g. having GPS capability) and can present itself to a sensor server (SS) 125; in such cases, there will be no need to look up the position information in location server 170.

Data from a sensor network (i.e. such as sensor network 120) may be provided if mobile device 110 is in the proximity of a sensor server such as sensor server 125, so that it can attach to the short range network (in some embodiments, this connection may be over a mobile access network). Sensor data server 140 may look up the policy pre-set by the entity controlling the PEP (as described further below) for sensor data in a policy server (PS) 180 (policy server may be part of the operator core network). The policy may contain information about what type of information may be provided and who could receive the information for example.

Sensor data server 140 may manage the access to the data by creating an authentication token (a first token) for sensor server 125 (a first server) to push information to mobile device 110 based on the policy set by the entity controlling the PEP. If the policy set by the entity controlling the PEP does not allow for the data to be delivered to sensor server 125, the authentication token may not be created. The token may also be used to filter out elements of the dataset. Since the capabilities of mobile device 110 (based on the attached sensor network 120) are known from the device reporting its capability, the token can be designed to enable the sensor server 125 only to subscribe to data sources for certain types of data.

Sensor data server 140 may push the token, along with the address or identification of the device (retrieved from the device capabilities), to sensor server 125. Concurrently, sensor data server 140 may push the policy for mobile device 110 to a sensor pattern server (SPS) 145 (that may be part of the operator core network).

Sensor server 125 may receive the token and the address or identification of the mobile device 110 in the short-range network. Sensor server 125 may request an attachment to mobile device 110 by presenting the token. Sensor server 125 may also request a subscription to data from sensor network 120. The sensor server can make this request by using, for example, a publish-subscribe protocol such as SIP.

If additional security in this communication is desired, the token can be encrypted by sensor data server 140 using an encryption key that may be provided by mobile device 110 to the capabilities server.

If the mobile device 110 recognizes the token as being generated according to its policy, the attachment request and subscription request may be accepted. Mobile device 110 may then commence pushing data to sensor server 125.

Sensor server 125 may receive the data from mobile device and collect it along with the metadata. The data and the metadata may be compared with the policy set by the entity controlling the PEP which was received with the token. The policy may be applied by PEP 128 in sensor server 125. The PEP may filter out all data that the entity controlling the PEP has designated as being unfit to share. The sensor server 125 may send the filtered data (i.e. data that has not been filtered out by PEP 128) to sensor data server 140. Sensor data server 140 may collate the filtered data, group the collated data into a time series and may forward it to the sensor pattern server 145.

In some embodiments, sensor server 125 may connect directly to sensor pattern server 145 and deliver the data (i.e. without being connected via sensor data server 140). The filtering, collation and grouping may take place in the sensor patter server in these embodiments.

The sensor pattern server 145 may thus receive the data, originating from sensors in sensor network 120, from the mobile device 110 via sensor server 125 and sensor data server 140 (or only via sensor server 125 in some embodiments). In some embodiments, the sensor data server and the sensor pattern server may be incorporated into one (network) node.

The sensor pattern server 145 may request additional data from the sensor data server 140 if such data is available. Sensor data server 140 may determine if additional data is available by determining the position of mobile device 110. As described above, the mobile device location may be looked up in location server 170. The sensor data server 140 may then check the capabilities server 175 to determine if additional sensor networks are available (or detected) in the same general area.

In the embodiment illustrated in FIG. 1, a fixed sensor network (FSN) 130 is also available. Sensor network 130 may have an associated sensor server 135. Sensor data server 140 may request data from sensor network 130 as described below. In some embodiments, a fixed sensor network (such as 130) may be attached to a base station. In the embodiment of FIG. 1, it is illustrated as being connected directly to a sensor server.

Sensor data server 140 may look up the policy set by the entity controlling the PEP 130 for sensor data in policy server 180. Sensor data server 140 may create an authentication token (a second token) for sensor server 135 (the second sensor server) based on the policy (set by the owner of the sensor network 130). If the policy does not allow for the data to be delivered to the sensor server 135, the second token may not be created. The second token may also be used to filter out elements of the dataset. Since the capabilities of the sensor network 130 and the identity (of sensor network 130) are known, the second token can be designed only to enable the sensor server 135 to subscribe to data sources for certain types of data.

Sensor data server 140 may push the second token (along with the address or identification of the sensor network 130 as retrieved from the capabilities server 175) to sensor server 135. Concurrently, sensor data server 140 may push the policy for the sensors in sensor network 130 to the sensor pattern server 145.

Sensor server 135 may receive the second token and create a subscription to the sensor data utilizing a publish-subscribe protocol such as SIP for example. Sensor server 135 may recognize the second token as being generated according to the policy set by the entity controlling the PEP associated with the sensor network 130 and accept the subscription to its data.

Sensor server 135 may receive the data from sensor network 130. The data (and metadata) from sensor network 130 may be received on a continuous basis. The data and metadata may be compared with the policy set by the owner of the sensor network 130 and received with the token. The policy may be applied by policy execution point 138 in sensor server 135. PEP 138 may filter out all data that has been designated in the policy as being unfit to share. Sensor server 135 may send the filtered data (i.e. data that has not been filtered out by PEP 138) to sensor data server 140.

Sensor data server 140 may collate the received data, group the collated data, e.g. into a time series, and forward it to the sensor pattern server 145. In some embodiments, sensor server 135 may connect directly to sensor pattern server 145 and deliver the data (i.e. without being connected via sensor data server 140). The filtering, collation and grouping may take place in the sensor patter server in these embodiments.

Sensor pattern server 145 may thus also receive the data from sensor network 130 via sensor server 135 and sensor data server 140 (or only via sensor server 135 in some embodiments).

In some embodiments, data from a second source (from the fixed sensor network 130 for example) may be received without being requested by sensor patter server 145. Data from the second source may also be received at a frequency that is different from a frequency at which data from the first source may be received. Data from the second source may not also be received at the same time as data from the first source.

Sensor pattern server 145 may then enrich (or enhance) the data received from the sensor data server 140. The enrichment may be performed using known methods. Enrichment may include providing additional value, meaning or context to data received from the sensor network

Sensor pattern server 145 therefore now includes enriched data which may be available to an authorized requestor 190 over a network such as the internet 160 upon request. The sensor pattern server 140 may provide sensor data to requestors that may have subscribed to particular types of data, e.g. data from a particular area, data from a specific type of devices, or data at particular timeslots or intervals. The publish-subscribe mechanisms that are available (in IMS for example) do not set any limitations on the data types, etc. Exemplary embodiments as described facilitate availability of the data in the manner described.

The policies enforced by PEPs (i.e. 118, 128 and 138 for example) may be set by the entity controlling the equipment having the PEP or the sensors. For example, in the case of mobile device 110, the policy may be set by the user of the mobile device 110 or the subscriber to the network access service for the mobile device 110, which may be an individual or a corporation. The various reasons for setting the policy may result from the user's concern with privacy, economic renumeration, etc.

In order to distinguish the sensor servers 125 and 135, sensor server 125 may be referred to as a first sensor server and sensor server 135 may be referred to as a second sensor server. Similarly, sensor network 120 may be referred to as a first sensor network and sensor network 130 may be referred to as a second sensor network. Sensor network 120 may also be referred to as an ad-hoc network. Sensor network 130 may also be referred to as a fixed sensor network.

In some embodiments, the sensors may be integrated within the mobile device obviating the need for a sensor network that is attached to the mobile device. As illustrated in FIG. 2, sensor monitoring and reporting system 200 includes a mobile device 110 with integrated sensors 112. In contrast to system 100, the readings that are provided by mobile device are those from sensors 112.

In a similar manner, in some embodiments, the sensors may be integrated within the base station obviating the need for a (fixed) sensor network that is externally attached to the base station.

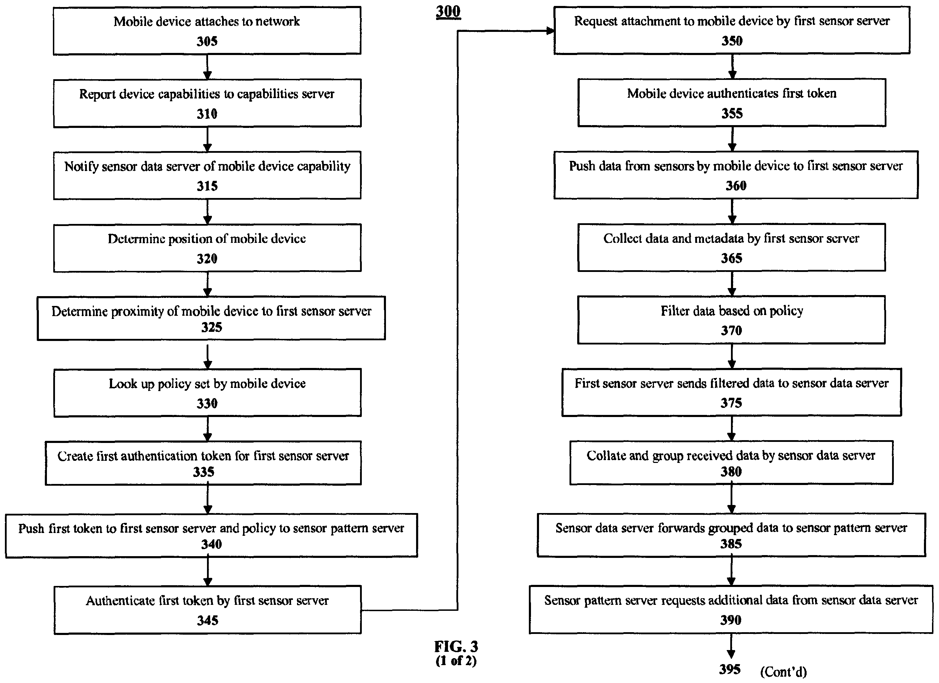

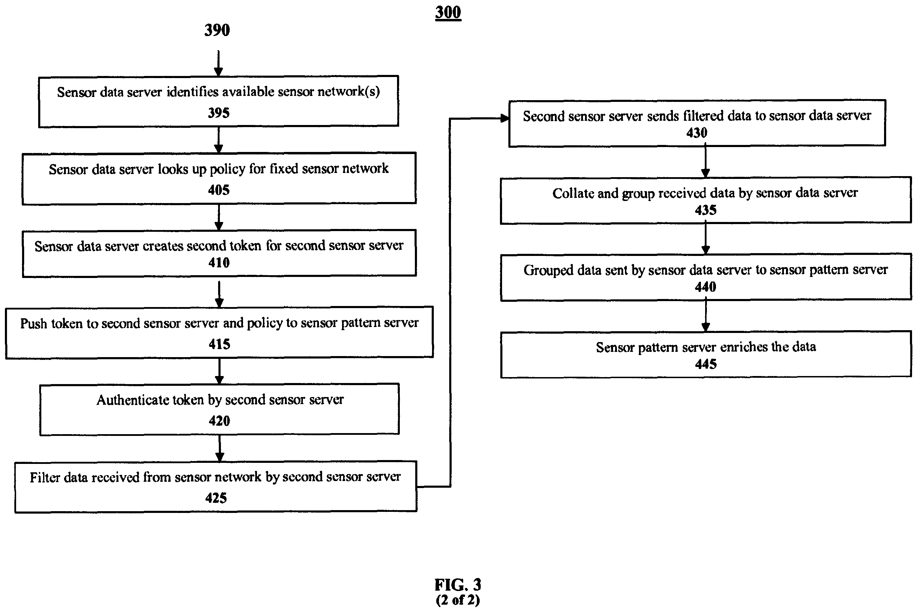

A method 300 in accordance with exemplary embodiments is illustrated in FIG. 3. A mobile device may attach to a mobile access network at 305. The mobile device capabilities may be reported to a capabilities server at 310. The capabilities server may notify a sensor data server of the mobile device capability at 315. Sensor data server may determine position of mobile device at 320. The proximity of the mobile device to a (first) sensor server may be determined at 325. Sensor data server 140 may look up the policy set by mobile device at 330.

Sensor data server may create an authentication token (a first token) for the (first) sensor server to push information to mobile device based on the policy at 335. The sensor data server may push the first token to a first sensor server and user policy to a sensor pattern server at 340. The first sensor server may authenticate the first token at 345. If the first token is valid, the first sensor server may request an attachment to the mobile device by presenting the first token and requesting a subscription to data from the sensor network (attached to the mobile device) at 350.

The mobile device may determine the authenticity of the first token at 355. If the token is authentic, the attachment request and subscription request of the sensor data server to the mobile device may be accepted and the mobile device may push data to first sensor server at 360.

The first sensor server may receive the data from mobile device along with metadata at 365. The collected data and meta data may be compared with the user-set policy at 370 to filter out data that was not designated to be received. The first sensor server may send the filtered data (i.e. data that was not filtered out) to sensor data server at 375.

Sensor data server may collate the received data and group the received data into a time series at 380. The grouped data may be forwarded to the sensor pattern server at 385. The sensor pattern server may request additional data from the sensor data server at 390 (if such data is available).

The sensor data server may identify available network(s) (such as a fixed sensor network) at 395. If such a sensor network is available, the sensor data server may look up the policy set by the entity controlling the PEP associated with such sensor network for sensor data in the policy server at 405.

The sensor data server may create a second authentication token for the second sensor server (corresponding to the fixed network for example) based on the policy set by the entity controlling the policy execution point associated with the fixed sensor network at 410. The sensor data server may push the second token to the second sensor server and push the policy to the sensor pattern server at 415.

The policy enforcement point (PEP) associated with the second sensor server may authenticate the second token and accept the subscription to its data at 420. Data and metadata from the fixed sensor network (that is being received continuously by the second sensor server) may be filtered by the second sensor server at 425. The filtering may include the data and metadata being compared by the second sensor server with the policy set by the entity controlling the PEP for example.

The second sensor server may send the filtered data to the sensor data server at 430. The sensor data server may collate the received (filtered) data and group the collated data into a time series at 435. The grouped data may be forwarded to the sensor pattern server at 440. The sensor pattern server may enrich the data at 445.

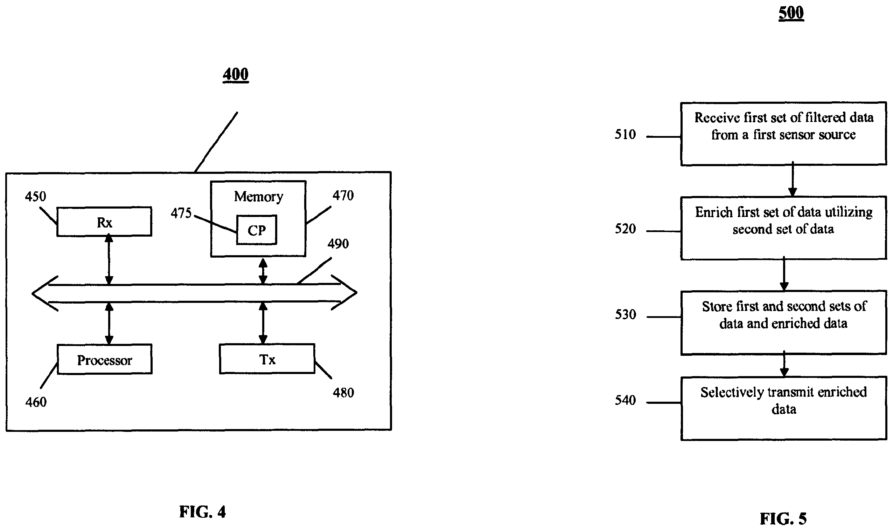

Exemplary embodiments as described above may be implemented in a network node. A network node 400 is illustrated in FIG. 4. Network node 400 may incorporate sensor data server 140 and sensor pattern server 150 of system 100 of FIG. 1. Network node 400 may include, *inter alia*, a receiving means 450, a processor 460, a computer readable medium 470 in the form of memory and a transmitting means 480.

Receiving means 450 may receive a first set of data from a first sensor source such as mobile device 110 of system 100 (via sensor server 125) for example. Processor 460 may enrich the received data utilizing a second set of data. The second set of data may be such as that received from fixed sensor network 130 of system 100 (via sensor server 135) for example. Memory 470 may store the first and second sets of data as well as the enriched data.

In some embodiments, the second set of data may be historical data for example (i.e. not one that is not being received at the same time from the fixed sensor network). Transmitting means 480 may transmit the enriched data in a selective manner such as only to subscribers for example. As described above with reference to system 100 of FIG. 1, the first set of data may be filtered based on a pre-set policy prior to reception by network node 400. Receiving means 450, processor 460, memory 470 and transmitting means 480 may be interconnected via a data bus 490.

A method in accordance with other exemplary embodiments may be described with reference to FIG. 5. In method 500 of FIG. 5, a first set of filtered data may be received from a first sensor source at 510. The received first set of data may be enriched utilizing a second set of data at 520. The first set of data, the second of data and the enriched data may be stored at 530. The enriched data may be selectively transmitted at 540. The first set of data is filtered according to a first pre-set policy.

Referring back to FIG. 4, in one embodiment, in order for the processor 460 to be able to perform the steps illustrated in FIG. 3 and FIG. 5, the memory 470 comprises a computer program (CP) 475 with computer program modules which when run by the processor 460 causes the network node 400 perform all or some of the steps illustrated in FIG. 3 and FIG. 5.

The memory may for example be a flash memory, a RAM (Random-access memory) ROM (Read-Only Memory) or an EEPROM (Electrically Erasable Programmable ROM), and the computer program modules described above could in alternative embodiments be distributed on additional memories (not shown) in the network node 400. The processor may not only be a single CPU (Central processing unit), but could comprise two or more processing units in network node 400. For example, the processor may include general purpose microprocessors, instruction set processors and/or related chips sets and/or special purpose microprocessors such as ASICs (Application Specific Integrated Circuit). The processor may also comprise board memory for caching purposes.

Exemplary embodiments as described above may be used for various purposes. In one exemplary application, it may be used to generate content for local media outlets. All or a number of users that may be representative of a neighborhood may be given a sensor. This can be inexpensive or economical as it can be integrated in one package and can even be printed on paper. Communication of sensor readings from these sensors can take place via a short range communication interface such as Bluetooth or IrDA to a mobile device . The readings from these sensors can then be transmitted through the mobile device to a sensor server.

A reading from a user can be compared to the readings from the total group of the users that were given the sensors. They may also be compared to a selected subgroup of users such as those selected by the users' social network or the capability of his or her device(s). The user's location can also be included, making it possible to compare the user against the readings from users in a geographical area such as the immediate neighborhood for example.

The result of the comparison may be packaged in a widget or other visualization mechanism and can be presented to the user on the device or devices selected by the user (a mobile computing device for example). It can also be presented by being printed in a newspaper or displayed on a television, or a variety of other means.

Exemplary methods as described herein include many advantages. An advantage is providing the ability to exploit the locality of the sensor readings.

For certain applications, such as social media and gaming, it is imperative that latency and delay for receiving updated data are minimized. Exemplary embodiments permit the local processing of data to reduce the latency and delay for making that data available to other, nearby, nodes. For social media applications, timely delivery of local information is important for meetings between social media users. With gaming, it is critical that game updates are delivered as quickly as possible to ensure a seamless gaming experience.

Locality also helps in providing a more predictable user experience as there are less variables influencing the responsiveness of the system compared to one where the processing and storage are located in a remote location.

Additionally, this leads to efficiency gains as sensor data gathered for local use can be accessed locally rather than incurring the additional cost of a remote transaction. As described above, the sensor readings from base stations can be enriched with readings from the user's actual location. This approach leads to more meaningful, relevant and reliable readings.

A portion of the enrichment or enhancement process may include utilizing known principles or history. For example, if received CO2 readings are high, then the enrichment process may lead to a conclusion that NO2 readings, which may not have been received, can also be considered to be high (based on history or known scientific or other principles). Enrichment may also be thought of as obtaining patterns in received data and/or making inferences/predictions by incorporating known principles/history, etc.

Each of the servers described above can be deployed on the Internet for example. Exemplary embodiments enable sensors that are deployed in an ad-hoc manner to be used as data sources by a sensor node (server) attached to a base station, and enables it to aggregate their data and use these as complements to the measurements it makes itself. The sensors deployed with the base station will also be able to make predictions about the future readings of ad-hoc sensors by relating the received readings to its own sensors, and report this with a reduced degree of confidence.

The sensor network could also be integrated with computing resources deployed on the base station to form a cloud-computing system. If a user wishes to perform some extra processing, using a cloud-computing system provided and managed by the operator may be more appropriate than using a digital signal processor (DSP) capacity of the base-station. This can be accomplished by a dedicated piece of software which leverages free capacity for the processing such as, for example, where the base station has a multi-core processor.

The attachment to the short-range network can be made in different ways. Concurrent with the attachment to the remote radio network (i.e. cellular network connection), an attachment to the short-range network may take place. This short range attachment can be used to submit the data to the sensor server.

There are several brokering opportunities associated with the deployment in the manner described. An operator of a cellular network can determine who can buy sensor data and what type of sensor data can be bought. Base station processing power can be used to generate revenue. Users of mobile devices whose equipment is used to gather data can receive credit such as a discount in their monthly cellphone bill.

It will be appreciated that the procedures (arrangement) described above may be carried out repetitively as necessary. To facilitate understanding, many aspects of the invention are described in terms of sequences of actions. It will be recognized that the various actions could be performed by a combination of specialized circuits and software programming.

A system in accordance with exemplary embodiments may include a combination of the various elements described above. For example, a number of mobile devices may be included in the system. Some of these mobile devices may have integrated sensors; some of the mobile devices may not have integrated sensors but are capable of being connected to a sensor network. More than one fixed sensor network may also be included. A number of sensor servers may be included in the system with some of them being available for mobile device connection and some available for the fixed sensor network.

In some embodiments, the sensor data server may only obtain data from a sensor server that receives the data from a mobile device (i.e. no fixed sensor network maybe available). In such an arrangement, the obtained data is submitted to the sensor pattern server for enrichment.

Thus, the invention may be embodied in many different forms, not all of which are described above, and all such forms are contemplated to be within the scope of the invention. It is emphasized that the terms "comprises" and "comprising", when used in this application, specify the presence of stated features, steps, or components and do not preclude the presence or addition of one or more other features, steps, components, or groups thereof.

The particular embodiments described above are merely illustrative and should not be considered restrictive in any way. The scope of the invention is determined by the following claims.

## Claims

1. A network node (400) configured to process sensor data, comprising:
a receiving means (450) for receiving a first set of filtered data from a first sensor server (125) associated with a mobile device (110) having at least one integrated sensor and a second set of filtered data from a second sensor server (135) associated with at least one fixed sensor network (130), wherein said first set of filtered data is filtered according to a first pre-set policy prior to reception at the network node and said second set of filtered data is filtered according to a second pre-set policy prior to reception at the network node (400);
a processor (460) for enriching the received first set of filtered data utilizing the received second set of filtered data;
a memory (470) for storing the first set of filtered data, the second set of filtered data and the enriched data; and
a transmitting means (480) for selectively transmitting the enriched data to authorized requestors of at least a portion of the enriched data.

2. The network node of claim 1, wherein the receiving means is further configured to receive information on capabilities and an identity of the mobile device (110) from a capabilities server; and
location information of the mobile device (110) from a location server.

3. The network node of claim 2, wherein the processor (460) is further configured to generate a first token for the first sensor server (125) and transmit the first token to the first sensor server (125) via the transmitting means, wherein the first token is generated based on the first pre-set policy obtained from a policy server and the identity of the mobile device (110).

4. The network node of claim 3, wherein the receiving means is further configured to receive data from the first sensor server (125) based on authentication of the first token by the mobile device (110).

5. A method (500) of processing sensor data, performed by a network node (400), comprising:
receiving (510) a first set of filtered data from a first sensor server (125) associated with a mobile device (110) having at least one integrated sensor and a second set of filtered data from a second sensor server (135) associated with at least one fixed sensor network (130), wherein said first set of filtered data is filtered according to a first pre-set policy prior to reception at the network node (400) and said second set of filtered data is filtered according to a second pre-set policy prior to reception at the network node (400);
enriching (520) the received first set of filtered data utilizing the received second set of filtered data;
storing (530) the first set of filtered data, the second set of filtered data and the enriched data; and
selectively transmitting the enriched data to authorized requestors of at least a portion of the enriched data.

6. The method of claim 5, further comprising:
receiving information on capabilities and an identity of the mobile device (110) from a capabilities server;
receiving location information of the mobile device (110) from a location server;
obtaining the first pre-set policy from a policy server;
generating a first token based on the first pre-set policy and the identity of the mobile device (110); and
transmitting the first token to the first sensor server (125).

7. The method of claim 6, further comprising:
receiving data from the first sensor server (125) based on authentication of the first token by the mobile device (110).

8. The method of claim 5, further comprising:
obtaining the second pre-set policy from a policy server;
generating a second token based on the second pre-set policy and an identity of the at least one fixed sensor; and
transmitting the second token to the second sensor server (135).

9. The method of claim 8, further comprising:
receiving data from the second sensor server (135) based on authentication of the second token by the second sensor server (135).

10. The method of claim 5, wherein the second set of filtered data represents historical data.

11. The method of claim 5, wherein the sensor data corresponds to a measurement of an environmental parameter.

12. The method of claim 5, further comprising:
receiving a request from a requestor for at least a portion of the enriched data;
validating an identity of the requestor; and
transmitting the enriched data to the validated requestor.

13. A computer program (475) comprising computer readable program modules which when run on a network node (400) causes the network node to:
receive a first set of filtered data from a first sensor server (125) associated with a mobile device (110) having at least one integrated sensor and a second set of filtered data from a second sensor server (135) associated with at least one fixed sensor network (130), wherein said first set of filtered data is filtered according to a first pre-set policy prior to reception at the network node (400) and said second set of filtered data is filtered according to a second pre-set policy prior to reception at the network node (400);
enrich the received first set of filtered data utilizing the received second set of filtered data;
store the first set of filtered data, the second set of filtered data and the enriched data; and
selectively transmit the enriched data to authorized requestors of at least a portion of the enriched data.

14. A computer readable medium comprising a computer program according to claim 13.

## Patentansprüche

1. Netzknoten (400), konfiguriert zum Verarbeiten von Sensordaten, umfassend:
ein Empfangsmittel (450) zum Empfangen eines ersten Satzes von gefilterten Daten von einem ersten Sensorserver (125), der einer mobilen Vorrichtung(110) mit zumindest einem integrierten Sensor zugeordnet ist, und eines zweiten Satzes von gefilterten Daten von einem zweiten Sensorserver (135), der zumindest einem festen Sensornetz (130) zugeordnet ist, wobei der erste Satz von gefilterten Daten nach einer ersten voreingestellten Richtlinie vor dem Empfang am Netzknoten gefiltert wird und der zweite Satz von gefilterten Daten nach einer zweiten voreingestellten Richtlinie vor dem Empfang am Netzknoten (400) gefiltert wird;
einen Prozessor (460) zum Anreichern des empfangenen ersten Satzes von gefilterten Daten unter Verwendung des empfangenen zweiten Satzes von gefilterten Daten;
einen Speicher (470) zum Speichern des ersten Satzes von gefilterten Daten, des zweiten Satzes von gefilterten Daten und der angereicherten Daten; und
ein Übertragungsmittel (480) zum selektiven Übertragen der angereicherten Daten an autorisierte Antragsteller von zumindest einem Teil der angereicherten Daten.

2. Netzknoten nach Anspruch 1, wobei das Empfangsmittel ferner konfiguriert ist, um Informationen über Fähigkeiten und eine Identität der mobilen Vorrichtung (110) von einem Funktionsserver zu empfangen; und
Standortsinformationen der mobilen Vorrichtung (110) von einem Standortsserver.

3. Netzknoten nach Anspruch 2, wobei der Prozessor (460) ferner konfiguriert ist, um ein erstes Token für den ersten Sensorserver (125) zu erzeugen und das erste Token über das Übertragungsmittel an den ersten Sensorserver (125) zu übertragen, wobei das erste Token basierend auf der ersten voreingestellten Richtlinie, die von einem Richtlinienserver erhalten wurde, und der Identität der mobilen Vorrichtung (110) erzeugt wird.

4. Netzknoten nach Anspruch 3, wobei das Empfangsmittel ferner konfiguriert ist, um Daten von dem ersten Sensorserver (125) basierend auf der Authentifizierung des ersten Tokens durch die mobile Vorrichtung (110) zu empfangen.

5. Verfahren (500) zum Verarbeiten von Sensordaten,
durchgeführt von einem Netzknoten (400), umfassend:
Empfangen (510) eines ersten Satzes von gefilterten Daten von einem ersten Sensorserver (125), der einer mobilen Vorrichtung (110) mit zumindest einem integrierten Sensor zugeordnet ist, und eines zweiten Satzes von gefilterten Daten von einem zweiten Sensorserver (135), der zumindest einem festen Sensornetz (130) zugeordnet ist,
wobei der erste Satz von gefilterten Daten nach einer ersten voreingestellten Richtlinie vor dem Empfang am Netzknoten (400) gefiltert wird und der zweite Satz von gefilterten Daten nach einer zweiten voreingestellten Richtlinie vor dem Empfang am Netzknoten (400) gefiltert wird;
Anreichern (520) des empfangenen ersten Satzes von gefilterten Daten unter Verwendung des empfangenen zweiten Satzes von gefilterten Daten;
Speichern (530) des ersten Satzes von gefilterten Daten, des zweiten Satzes von gefilterten Daten und der angereicherten Daten; und
selektives Übertragen der angereicherten Daten an autorisierte Antragsteller von zumindest einem Teil der angereicherten Daten.

6. Verfahren nach Anspruch 5, ferner umfassend:
Empfangen von Informationen über Fähigkeiten und einer Identität der mobilen Vorrichtung (110) von einem Fähigkeitsserver;
Empfangen von Standortinformationen der mobilen Vorrichtung (110) von einem Standortserver;
Erlangen der ersten voreingestellten Richtlinie von einem Richtlinienserver;
Erzeugen eines ersten Tokens basierend auf der ersten voreingestellten Richtlinie und der Identität der mobilen Vorrichtung (110); und
Übertragen des ersten Tokens an den ersten Sensorserver (125) .

7. Verfahren nach Anspruch 6, ferner umfassend:
Empfangen von Daten von dem ersten Sensorserver (125) basierend auf der Authentifizierung des ersten Tokens durch die mobile Vorrichtung (110).

8. Verfahren nach Anspruch 5, ferner umfassend:
Erlangen der zweiten voreingestellten Richtlinie von einem Richtlinienserver;
Erzeugen eines zweiten Tokens basierend auf der zweiten voreingestellten Richtlinie und einer Identität des zumindest einem festen Sensors; und
Übertragen des zweiten Tokens an den zweiten
Sensorserver (135).

9. Verfahren nach Anspruch 8, ferner umfassend:
Empfangen von Daten von dem zweiten Sensorserver (135) basierend auf der Authentifizierung des zweiten Tokens durch den zweiten Sensorserver (135).

10. Verfahren nach Anspruch 5, wobei der zweite Satz von gefilterten Daten historische Daten darstellt.

11. Verfahren nach Anspruch 5, wobei die Sensordaten einer Messung eines Umgebungsparameters entsprechen.

12. Verfahren nach Anspruch 5, ferner umfassend:
Empfangen eines Antrags von einem Antragsteller für zumindest einen Teil der angereicherten Daten; Bestätigen der Identität des Antragstellers; und Übertragen der angereicherten Daten an den überprüften Antragsteller.

13. Computerprogramm (475), umfassend computerlesbare Programmmodule, die, wenn sie auf einem Netzknoten (400) ausgeführt werden, den Netzknoten zu folgendem veranlassen:
Empfangen eines ersten Satzes von gefilterten Daten von einem ersten Sensorserver (125), der einer mobilen Vorrichtung (110) mit zumindest einem integrierten Sensor zugeordnet ist, und eines zweiten Satzes von gefilterten Daten von einem zweiten Sensorserver (135), der zumindest einem festen Sensornetz (130) zugeordnet ist,
wobei der erste Satz von gefilterten Daten nach einer ersten voreingestellten Richtlinie vor dem Empfang am Netzknoten (400) gefiltert wird und der zweite Satz von gefilterten Daten nach einer zweiten voreingestellten Richtlinie vor dem Empfang am Netzknoten (400) gefiltert wird;
Anreichern des empfangenen ersten Satzes von gefilterten Daten unter Verwendung des empfangenen zweiten Satzes von gefilterten Daten;
Speichern des ersten Satzes von gefilterten Daten, des zweiten Satzes von gefilterten Daten und der angereicherten Daten;
und
selektives Übertragen der angereicherten Daten an autorisierte Antragsteller von zumindest einem Teil der angereicherten Daten.

14. Computerlesbares Medium, umfassend ein Computerprogramm nach Anspruch 13.

## Revendications

1. Noeud de réseau (400) configuré pour traiter des données de capteurs, comprenant :
un moyen de réception (450) pour recevoir un premier ensemble de données filtrées à partir d'un premier serveur de capteur (125) associé à un dispositif mobile (110) ayant au moins un capteur intégré et un deuxième ensemble de données filtrées à partir d'un deuxième serveur de capteur (135) associé à au moins un réseau de capteur fixe (130),
dans lequel ledit premier ensemble de données filtrées est filtré selon une première politique prédéfinie avant la réception au niveau du noeud de réseau et ledit deuxième ensemble de données filtrées est filtré selon une deuxième politique prédéfinie avant la réception au niveau du noeud de réseau (400) ;
un processeur (460) pour enrichir le premier ensemble reçu de données filtrées en utilisant le deuxième ensemble reçu de données filtrées ;
une mémoire (470) pour stocker le premier ensemble de données filtrées, le deuxième ensemble de données filtrées et les données enrichies ; et
un moyen de transmission (480) pour transmettre de manière sélective les données enrichies à des demandeurs autorisés d'au moins une portion des données enrichies.

2. Noeud de réseau selon la revendication 1, dans lequel le moyen de réception est configuré en outre pour recevoir des informations sur des capacités et une identité du dispositif mobile (110) à partir d'un serveur de capacités ; et
des informations de localisation du dispositif mobile (110) à partir d'un serveur de localisation.

3. Noeud de réseau selon la revendication 2, dans lequel le processeur (460) est configuré en outre pour générer un premier jeton pour le premier serveur de capteur (125) et transmettre le premier jeton au premier serveur de capteur (125) par le biais des moyens de transmission, dans lequel le premier jeton est généré sur la base de la première politique prédéfinie obtenue à partir d'un serveur de politique et de l'identité du dispositif mobile (110).

4. Noeud de réseau selon la revendication 3, dans lequel le moyen de réception est configuré en outre pour recevoir des données à partir du premier serveur de capteur (125) sur la base d'une authentification du premier jeton par le dispositif mobile (110).

5. Procédé (500) de traitement de données de capteur, effectué par un noeud de réseau (400), comprenant :
la réception (510) d'un premier ensemble de données filtrées à partir d'un premier serveur de capteur (125) associé à un dispositif mobile (110) ayant au moins un capteur intégré et un deuxième ensemble de données filtrées à partir d'un deuxième serveur de capteur (135) associé à au moins un réseau de capteur fixe (130),
dans lequel ledit premier ensemble de données filtrées est filtré selon une première politique prédéfinie avant la réception au niveau du noeud de réseau (400) et ledit deuxième ensemble de données filtrées est filtré selon une deuxième politique prédéfinie avant la réception au niveau du noeud de réseau (400) ;
l'enrichissement (520) du premier ensemble reçu de données filtrées en utilisant le deuxième ensemble reçu de données filtrées ;
le stockage (530) du premier ensemble de données filtrées, du deuxième ensemble de données filtrées et des données enrichies ; et
la transmission sélective des données enrichies à des demandeurs autorisés d'au moins une portion des données enrichies.

6. Procédé selon la revendication 5, comprenant en outre :
la réception d'informations sur des capacités et d'une identité du dispositif mobile (110) à partir d'un serveur de capacités ;
la réception d'informations de localisation du dispositif mobile (110) à partir d'un serveur de localisation ;
l'obtention de la première politique prédéfinie à partir d'un serveur de politique ;
la génération d'un premier jeton sur la base de la première politique prédéfinie et de l'identité du dispositif mobile (110) ; et
la transmission du premier jeton au premier serveur de capteur (125) .

7. Procédé selon la revendication 6, comprenant en outre :
la réception de données à partir du premier serveur de capteur (125) sur la base d'une authentification du premier jeton par le dispositif mobile (110).

8. Procédé selon la revendication 5, comprenant en outre :
l'obtention de la deuxième politique prédéfinie à partir d'un serveur de politique ;
la génération d'un deuxième jeton sur la base de la deuxième politique prédéfinie et d'une identité de l'au moins un capteur fixe ; et
la transmission du deuxième jeton au deuxième serveur de capteur (135).

9. Procédé selon la revendication 8, comprenant en outre :
la réception de données à partir du deuxième serveur de capteur (135) sur la base d'une authentification du deuxième jeton par le deuxième serveur de capteur (135).

10. Procédé selon la revendication 5, dans lequel le deuxième ensemble de données filtrées représente des données historiques.

11. Procédé selon la revendication 5, dans lequel les données de capteur correspondent à une mesure d'un paramètre environnemental.

12. Procédé selon la revendication 5, comprenant en outre :
la réception d'une demande à partir d'un demandeur pour au moins une portion des données enrichies ;
la validation d'une identité du demandeur ; et
la transmission des données enrichies au demandeur validé.

13. Programme informatique (475) comprenant des modules de programme lisibles par ordinateur qui, quand ils sont exécutés sur un noeud de réseau (400), amènent le noeud de réseau à :
recevoir un premier ensemble de données filtrées à partir d'un premier serveur de capteur (125) associé à un dispositif mobile (110) ayant au moins un capteur intégré et un deuxième ensemble de données filtrées à partir d'un deuxième serveur de capteur (135) associé à au moins un réseau de capteur fixe (130),
dans lequel ledit premier ensemble de données filtrées est filtré selon une première politique prédéfinie avant la réception au niveau du noeud de réseau (400) et ledit deuxième ensemble de données filtrées est filtré selon une deuxième politique prédéfinie avant la réception au niveau du noeud de réseau (400) ;
enrichir le premier ensemble reçu de données filtrées en utilisant le deuxième ensemble reçu de données filtrées ;
stocker le premier ensemble de données filtrées, le deuxième ensemble de données filtrées et les données enrichies ; et
transmettre de manière sélective les données enrichies à des demandeurs autorisés d'au moins une portion des données enrichies.

14. Support lisible par ordinateur comprenant un programme informatique selon la revendication 13.
